# EUROPÄISCHE PATENTANMELDUNG

(11) **EP 3 053 726 A1**
(43) Veröffentlichungstag der Anmeldung: **10.08.2016**
(21) Anmeldenummer: 15000362.2
(22) Anmeldetag: 07.02.2015
(51) Int. Cl.: B29C 47/92, B29C 47/08

(54) **Vorrichtung zur Verschleißcharakterisierung und Extruderanordnung**

(71) Anmelder: HÄNDLE GmbH Maschinen und Anlagenbau, 75417 Mühlacker (DE)
(72) Erfinder: Treut, Andreas, 75248 Ölbronn (DE)
(74) Vertreter: Zurhorst, Stefan

(57) **Zusammenfassung**

Die Erfindung betrifft eine Extruderanordnung und eine Vorrichtung zur Verschleißcharakterisierung der in einem Extruder (4) eingesetzten Materialien. Die Vorrichtung ist als Prüfring (1) zum Einbringen von Testobjekten (2, 3) in den Materialstrom des Extruders (4) ausgebildet. Der Prüfring (1) ist zur Befestigung am Extruder (4) ausgelegt und bildet zusammen mit dem Extruder (4) die erfindungsgemäße Extruderanordnung. Der Prüfring (1) weist mindestens eine von seiner Außenseite zu seiner Innenseite führende Einführöffnung (5) auf, durch die ein Testobjekt (2, 3) von der Außenseite des Prüfrings (1) in den Materialstrom des Extruders (4) einführbar ist.

## Beschreibung

Die Erfindung betrifft eine Extruderanordnung und eine Vorrichtung zur Verschleißcharakterisierung der darin eingesetzten Materialien.

Bei der Verarbeitung bzw. Aufbereitung von mineralischen Massen, beispielsweise Tonerde für die Herstellung von Ziegeln, werden Extruder zum Strangpressen solcher Massen eingesetzt. Typischerweise umfasst ein Extruder einen Extruderzylinder, in dessen Inneren eine Extruderschnecke drehbar gelagert ist, und einen Presskopf, der mit dem Extruderzylinder verbunden ist. Die Extruderschnecke fördert im Betrieb die in den Extruderzylinder eingebrachte mineralische Masse, nachfolgend kurz Betriebsmasse genannt, durch den Presskopf hindurch. Während der Extruderzylinder einen im Wesentlichen kreisförmigen Durchlassquerschnitt aufweist, ist der ausgangsseitige Durchlassquerschnitt des Presskopfes an die Erfordernisse des stranggepressten Produkts angepasst. Im Betrieb wird die Betriebsmasse unter Einwirkung des durch die rotierende Extruderschnecke verursachten Vortriebs und des sich in Förderrichtung verengenden Durchlassquerschnitts des Presskopfs mit großem Druck durch den Presskopf gepresst.

Die einzelnen Bauteile eines derart betriebenen Extruders können sehr schnell verschleißen. Das Verschleißverhalten der einzelnen Bauteile hängt stark von der Wechselwirkung zwischen ihren zum Einsatz kommenden Materialien und der Betriebsmasse ab. Für das Verschleißverhalten sind verschiedene Eigenschaften der Betriebsmasse sowie die Betriebsparameter des Extruders von Bedeutung. Einflussgrößen können die Korngrößenverteilung, die Zusammensetzung aus Bestandteilen verschiedener Abrasivität, Wassergehalt und Viskosität der Betriebsmasse sein. Ebenso wird das Verschleißverhalten durch die Form des Presskopfs, die Förderleistung und den Pressdruck beeinflusst.

Durch geeignete Materialauswahl kann der Verschleiß der einzelnen Bauteile minimiert werden. Wegen der großen Anzahl an möglichen Wechselwirkungen und deren Komplexität ist die Wirksamkeit der den Verschleiß verringernden Maßnahmen nicht ohne weiteres vorhersehbar. Üblicherweise geschieht die Materialauswahl durch das Ausprobieren verschiedener Materialien unter Einsatzbedingungen. Hierbei wird das Bauteil, dessen Verschleißverhalten untersucht werden soll, durch ein Bauteil derselben Form, aber aus anderem Material ersetzt und der Verschleiß dieses neu eingesetzten Bauteils nach einer bestimmten Betriebsdauer qualitativ beurteilt. Soll beispielsweise das verschleißärmste Material für die Extruderschnecke bestimmt werden, müssen mehrere solcher Schnecken aus verschiedenen in Frage kommenden Materialien gefertigt werden. Je nach Größe der Extruderschnecke, bzw. des verwendeten Testbauteils, können dadurch sehr hohe Kosten entstehen. Eine Quantifizierung des Verschleißverhaltens bei solchen Testbauteilen ist häufig schwierig, da Vergleichsmöglichkeiten zu Referenzgrößen fehlen. Das Verschleißverhalten wird von vielen Parametern beeinflusst. In der Regel ist deshalb für jeden einzelnen, konkreten Anwendungsfall je eine eigene Versuchsreihe zur Ermittlung des am besten geeigneten Materials erforderlich. Erschwerend kommt hinzu, dass die Versuchslaufzeiten für das Ausprobieren eines einzigen Materialtyps sehr lang sind.

Der Erfindung liegt die Aufgabe zugrunde, Mittel zur Verfügung zu stellen, mittels derer eine Charakterisierung des Verschleißverhaltens von Materialien in kurzer Zeit auf einfache Weise möglich ist.

Diese Aufgabe wird durch eine Vorrichtung mit den Merkmalen des Anspruchs 1 gelöst.

Der Erfindung liegt des Weiteren die Aufgabe zugrunde, eine Extruderanordnung anzugeben, mittels derer eine vergleichende Verschleißcharakterisierung von in Frage kommenden Materialien in kurzer Zeit und auf einfache Weise möglich ist.

Diese Aufgabe wird durch eine Extruderanordnung mit den Merkmalen des Anspruchs 6 gelöst.

Der erfindungsgemäße Prüfring zum Einbringen von Testobjekten in den Materialstrom eines Extruders ist an dem Extruder und bevorzugt zwischen zwei Bauteilen des Extruders anzuordnen und weist mindestens eine Einführöffnung auf. Wenn der Prüfring am Extruder angeordnet ist, kann durch die mindestens eine Einführöffnung ein Testobjekt von der Außenseite des Prüfrings in den innen verlaufenden Materialstrom des Extruders eingeführt werden. Im Betrieb des Extruders fließt der Materialstrom durch den Prüfring hindurch und wird von den Innenseiten des Prüfrings umschlossen. Auf diese Weise kann ein Testobjekt in den Materialstrom des Extruders eingebracht werden, ohne dass der Extruder geöffnet oder auseinandergebaut werden muss. So ist ein einfaches und schnelles Einbringen eines Testobjekts in den Materialstrom eines Extruders möglich. Mit Hilfe des Prüfrings kann einfach und schnell das verschleißärmste Material für einen oder mehrere bestimmte Anwendungsfälle ermittelt werden.

Darüber hinaus kann die Form der Testobjekte so gewählt werden, dass die Versuchslaufzeiten zur Charakterisierung des Verschleißverhaltens eines Testobjekts sehr kurz sind. Insbesondere können kleine Testobjekte verwendet werden, so dass durch den geringeren Materialeinsatz Kosten eingespart werden können.

In vorteilhafter Weiterbildung des Prüfrings umfasst der Prüfring mindestens zwei, bevorzugt mehrere und insbesondere sechzehn über seinen Umfang verteilte Einführöffnungen. Auf diese Weise können mehrere Testobjekte zur gleichen Zeit unter absolut vergleichbaren Bedingungen untersucht werden. So wird Zeit eingespart und die Genauigkeit der Untersuchung erhöht. Da in einem Versuchsdurchlauf mehrere verschiedene Materialien gleichzeitig getestet werden können, kann das im konkreten Anwendungsfall verschleißärmste Material schnell ermittelt werden.

In vorteilhafter Weiterbildung der Erfindung ist vorgesehen, dass der Prüfring eine Haltevorrichtung für das Testobjekt umfasst, wobei die Haltevorrichtung radial von außen in die Einführöffnung eingeführt und dort befestigt ist. Mittels der Haltevorrichtung können Testobjekte so am Prüfring befestigt werden, dass sie im Betrieb des Extruders in verschiedenen Testdurchläufen immer auf dieselbe vergleichbare Weise in den Materialstrom des Extruders ragen. So kann bei gleicher Dimensionierung der Testobjekte beispielsweise sichergestellt werden, dass die Testobjekte zu Beginn eines Versuchsdurchlaufs immer gleich weit in den Materialstrom hineinragen. Darüber hinaus ist es möglich, die Testobjekte immer auf gleiche Weise an der Außenseite des Prüfrings zu befestigen, so dass die Prüfobjekte immer identisch eingebaut sind. Auf diese Weise sind bei verschiedenen Versuchsdurchläufen vergleichbare Versuchsbedingungen hinsichtlich des Einbringens der Prüfobjekte in den Materialstrom geschaffen. Ein Austausch der Testobjekte ist schnell und auf einfache Weise möglich.

In vorteilhafter Weiterbildung der Erfindung ist vorgesehen, dass der Prüfring einen im Wesentlichen kreisförmigen Durchlassquerschnitt aufweist. Durch die Radialsymmetrie des Durchlassquerschnitts eines solchen Prüfrings ist es auf einfache Weise möglich, für Testobjekte, die durch an verschiedenen Stellen angeordnete Einführöffnungen in den Materialstrom des Extruders eingebracht werden, vergleichbare Versuchsbedingungen zu schaffen.

In verbreiteter Bauweise umfasst die Extruderanordnung einen Presskopf und einen Extruderzylinder. Der Prüfring ist hierbei bevorzugt zwischen dem Presskopf und dem Extruderzylinder angeordnet. An dieser Stelle lässt sich der erfindungsgemäße Prüfring auf einfache Weise in einen Extruder integrieren. Üblicherweise ist der Presskopf mittels Befestigungselementen am Extruderzylinder festgelegt. Durch Lösen der Befestigungselemente kann der Prüfring, ohne dass weitere Eingriffe in den Extruder notwendig sind, in den Extruder integriert werden. Mit Hilfe der Anordnung des Prüfrings zwischen Presskopf und Extruderzylinder kann einfach und schnell das verschleißärmste Material für einen oder mehrere bestimmte Anwendungsfälle ermittelt werden. Sollten danach keine weiteren Tests mehr nötig sein, kann der Prüfring einfach und schnell wieder aus der Extruderanordnung entfernt werden.

In vorteilhafter Weiterbildung der Erfindung ist vorgesehen, dass die Durchlassquerschnitte des Presskopfs, des Prüfrings und des Extruderzylinders an ihren Verbindungsstellen gleich geformt sind. Auf diese Weise ist ein widerstandsfreier Fluss der Betriebsmasse vom Extruderzylinder durch den Prüfring in den Presskopf gewährleistet. Der Prüfring stellt so kein zusätzlich verengendes Hindernis für den Materialstrom dar, und es kommt nicht zu durch den Prüfring verursachten Ansammlungen der Betriebsmasse vor dem Prüfring, wenn keine Testobjekte in den Materialstrom eingebracht sind. Außerdem ist sichergestellt, dass die durch die Einführöffnungen gesteckten Testobjekte in den Materialstrom des Extruders eingebracht sind.

Ein Ausführungsbeispiel der Erfindung ist nachstehend anhand der Zeichnung näher erläutert. Es zeigen:
- Fig. 1: in einer perspektivischen Darstellung einen Teil eines Extruders für Tonerde mit einem Extruderzylinder und mit einem Presskopf,
- Fig. 2: in einer Seitenansicht den Extruder nach Fig. 2 mit einem zwischen dem Extruderzylinder und dem Presskopf angeordneten Prüfring,
- Fig. 3: in einer perspektivischen Ansicht den Prüfring nach Fig. 2 als Einzelteil mit Details seiner Ausgestaltung,
- Fig. 4: in einer Detailansicht gemäß der in Fig. 3 mit IV gekennzeichneten Schnittfläche eine erste Ausführungsform eines Objekthalters für ein stabförmiges Testobjekt, und
- Fig. 5: in einer Detailansicht gemäß der in Fig. 3 mit V gekennzeichneten Schnittfläche eine alternative Ausfuhrungsform eines Objekthalters für ein scheibenförmiges Testobjekt.

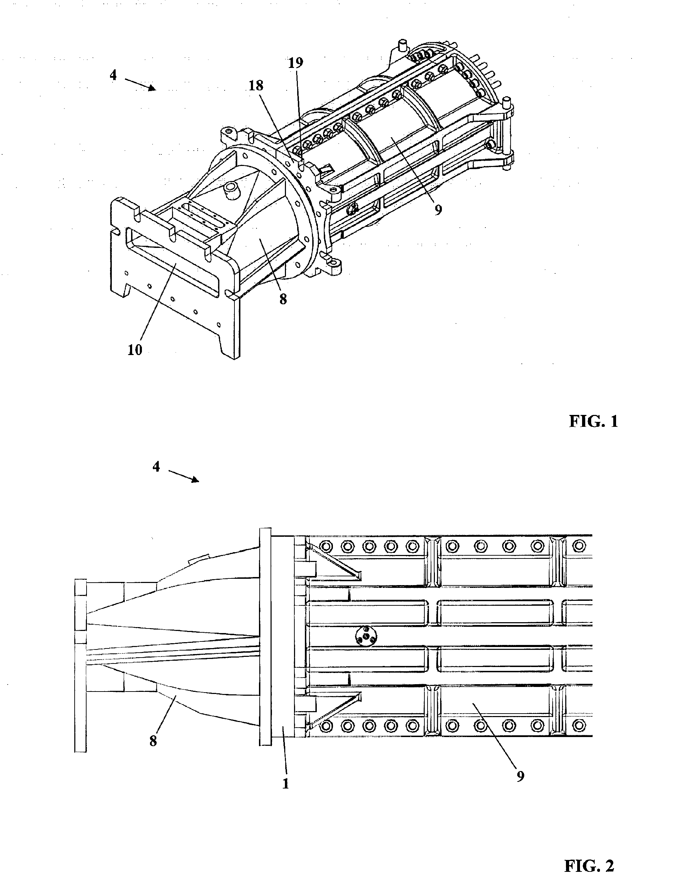

Fig. 1 zeigt in einer perspektivischen Darstellung einen Extruder 4 für Tonerde mit einem Extruderzylinder 9 und mit einem Presskopf 8. In Fig. 1 sind der Presskopf 8 und der Extruderzylinder 9 nicht miteinander verbunden, sondern befinden sich in einem Abstand zueinander, so dass zwischen beiden ein Spalt gebildet ist, in den der erfindungsgemäße Prüfring oder einer seiner Weiterbildungen einzubringen ist.

Fig. 2 zeigt eine Seitenansicht des Extruders 4 aus Fig. 1, wobei hier bereits schematisch der Prüfring 1 eingezeichnet ist. Wie in allen Figuren sind sich entsprechende Teile durch gleiche Bezugszeichen gekennzeichnet. Der Prüfring 1 ist zwischen dem Presskopf 8 und dem Extruderzylinder 9 angeordnet. Dabei ist der Rand der größeren Öffnung des im Wesentlichen trichterförmigen Presskopfs 8 auf eine Stirnfläche des Prüfrings 1 aufgebracht. Die Ränder der Öffnung des Extruderzylinders 9, zu der im Betrieb der Materialstrom durch die im Inneren des Extruderzylinders 9 angeordnete Extruderschnecke hin gefördert wird, sind auf die andere Stirnfläche des Prüfrings 1 aufgebracht. So wird im Betrieb durch die Extruderschnecke eine mineralische Betriebsmasse vom Extruderzylinder 9 durch den Prüfring 1 in den Presskopf 8 gefördert. Es kann auch vorgesehen sein, dass der Prüfring 1 einteilig mit dem Extruderzylinder 9 oder mit dem Presskopf 8 ausgebildet ist. Es kann auch vorgesehen sein, dass der Prüfring 1 einteilig mit einem sonstigen Bauteil des Extruders 4 ausgebildet ist.

Die dem Extruderzylinder 9 abgewandte Öffnung 10 des Presskopfs 8 bildet einen ausgangsseitigen Durchlassquerschnitt des Presskopfs 8 und ist an die Erfordernisse der nachgeschalteten Verarbeitungsschritte wie Formgebung oder dgl. angepasst.

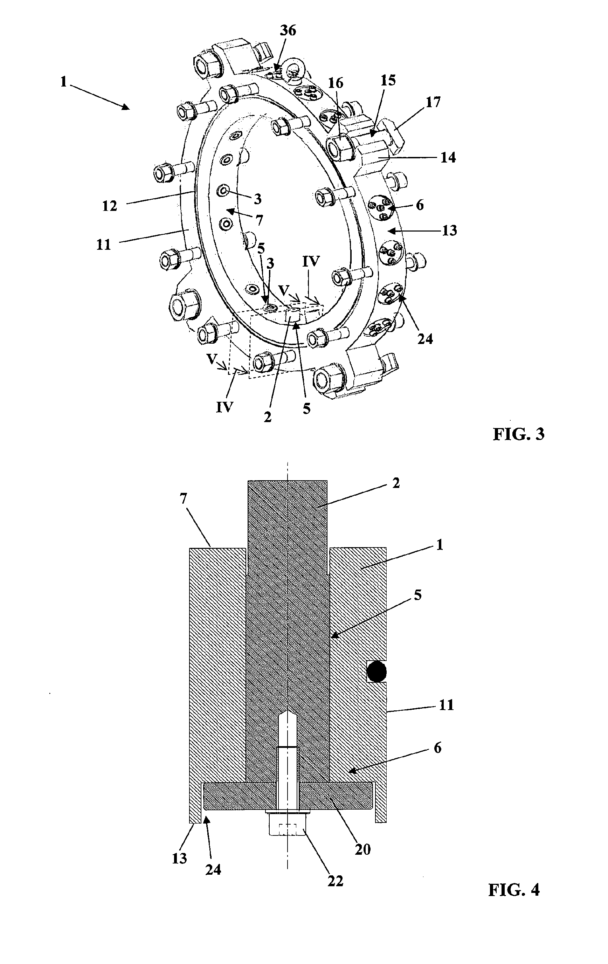

Fig. 3 zeigt in einer schematischen, perspektivischen Darstellung einen Prüfring 1. Hierbei ist der Prüfring 1 in einer seitlichen Ansicht auf die Stirnfläche 11 des Prüfrings 1 dargestellt. Die Stirnfläche 11 kontaktiert im eingebauten Zustand des Prüfrings 1 den in Fig. 2 gezeigten Presskopf 8. Hierbei wird die Verbindungstelle des Presskopfs 8 und des Prüfrings 1 über einen O-Dichtring abgedichtet. Zur Aufnahme des O-Dichtrings ist eine kreisförmig umlaufende Nut 12 in die Stirnfläche 11 des Prüfrings 1 eingebracht. Der Prüfring 1 ist im Wesentlichen kreisringförmig. Wie in Fig. 2 dargestellt, sind die Außenkonturen des Prüfrings 1 und des Presskopfs 8 an der Verbindungsstelle des Prüfrings 1 und des Presskopfs 8 aufeinander angepasst. An der Verbindungsstelle von Prüfring 1 und Extruderzylinder 9 sind die Außenkonturen des Prüfrings 1 und des Extruderzylinders 9 aufeinander angepasst. Wie in Fig. 3 gezeigt, sind am Außenumfang 13 des Prüfrings 1 im selben Abstand zueinander vier Fortsätze 14 angeordnet, in die die Gewindeschäfte von Hammerkopfschrauben 15 eingebracht sind. Die Gewindeschäfte der Hammerkopfschrauben 15 ragen aus der Stirnfläche 11 des Prüfrings 1 heraus und sind auf dieser Seite des Prüfrings 1 mit Muttern 16 gesichert. Die Hammerköpfe 17 der Hammerkopfschrauben 15 hintergreifen im eingebauten Zustand des Prüfrings 1 die in Fig. 1 dargestellten Flansche 18 des Extruderzylinders 9. Hierbei sind die Gewindeschäfte der Hammerkopfschrauben 15 in Nuten 19 der Flansche 18 des Extruderzylinders 9 eingebracht. Die Flansche 18 des Extruderzylinders 9 sind an dem Ende des Extruderzylinders 9 angeordnet, zu dem hin im Betrieb des Extruders 4 Betriebsmasse durch die Extruderschnecke gefördert wird. Die Flansche 18 bilden gleichzeitig eine Auflagefläche für die der Stirnfläche 11 gegenüberliegenden Stirnfläche des Prüfrings 1.

Der in Fig. 3 gezeigte Prüfring 1 ist im Wesentlichen kreisringförmig. Der Prüfring 1 weist in seiner Mitte einen Durchlass auf, durch den nach Befestigung des Prüfringes 1 an einem Extruder 4 im Betrieb des Extruders 4 Betriebsmasse gefördert wird. Der flachzylinderförmige Durchlass des Prüfrings 1 ist durch den Innenumfang 7 des Prüfrings 1 gebildet. Der Durchlassquerschnitt des Prüfrings 1 ist kreisförmig. Einführöffnungen 5 durchdringen den Prüfring 1 von seinem Außenumfang 13 zu seinem Innenumfang 7. Jede Einführöffnung 5 weist eine Öffnung am Außenumfang 13 und eine Öffnung am Innenumfang 7 des Prüfrings 1 auf. Die Einführöffnungen 5 sind parallel zur Stirnfläche 11 des Prüfrings 1 angeordnet. Die Einführöffnungen 5 sind radial zur Radialsymmetrieachse des flachzylinderförmigen Innenumfangs 7 des Prüfrings angeordnet. Die Einführöffnungen 5 sind im Ausführungsbeispiel nach der Fig. 3 durch Bohrungen realisiert, die radial zum kreisförmigen Durchlassquerschnitt des Prüfrings 1 angeordnet sind.

Im Ausführungsbeispiel nach der Fig. 3 sind insgesamt 16 Einführöffnungen 5 vorgesehen. Durch acht Öffnungen der 16 Einführöffnungen 5 im Innenumfang 7 des Prüfrings 1 ragen stabförmige Testobjekte 2 in den inneren Durchlassquerschnitt des Prüfrings 1 hinein. Durch weitere acht Öffnungen der 16 Einführöffnungen 5 im Innenumfang 7 des Prüfrings 1 ragen scheibenförmige Testobjekte 3 in den inneren Durchlassquerschnitt hinein.

Durch die Radialsymmetrie des Durchlassquerschnitts des Prüfrings 1 und die radiale Anordnung der Einführöffnungen 5 sind für die Testobjekte 2, 3, die durch an verschiedenen Stellen angeordnete Einführöffnungen 5 in den Materialstrom des Extruders 4 eingebracht sind, vergleichbare Versuchsbedingungen geschaffen. Voraussetzung hierfür ist zusätzlich, dass der Prüfring 1 symmetrisch im Materialstrom der Betriebsmasse angeordnet ist. Wie in Fig. 2 angedeutet, sind die Radialsymmetrieachsen des Extruderzylinders 9 und des flachzylindrischen Innenumfangs 7 des Prüfrings 1 gleich orientiert, und im Betrieb des Extruders 4 ist damit der Prüfring symmetrisch im Materialstrom der Betriebsmasse angeordnet.

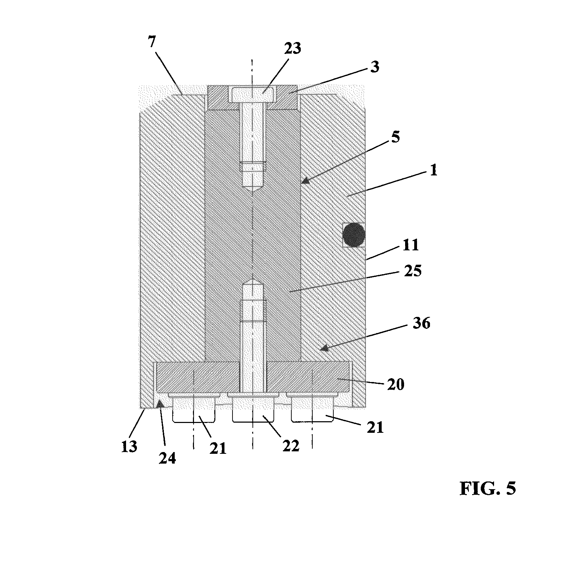

In Fig. 3 sind Flächen IV und V mit gestrichelten Linien markiert. Die Flächen IV und V liegen in Ebenen, in denen jeweils auch die Radialsymmetrieachse des flachzylinderförmigen Innenumfangs 7 des Prüfrings 1 liegt. Die Flächen IV und V sind orthogonal zur Stirnfläche 11 des Prüfrings 1 orientiert. Die Fläche IV markiert eine Schnittfläche durch den Prüfring 1 und durch eine Einführöffnung 5, in der sich ein scheibenförmiges Testobjekt 3 befindet. Die Fläche V markiert eine Schnittfläche durch den Prüfring 1 und durch eine Einführöffnung 5, in der sich ein stabförmiges Testobjekt 2 befindet. Die dazugehörigen Schnittdarstellungen sind in den Figuren 4 und 5 gezeigt.

Die Fig. 4 zeigt den Ausschnitt eines Schnitts durch den Prüfring 1 und durch ein in den Prüfring 1 mittels einer Haltevorrichtung 6 eingebrachtes stabförmiges Testobjekt 2, wobei der Bereich des Ausschnitts durch die in der Fig. 3 mit IV gekennzeichnete Fläche und die Stirnflächen des Prüfrings 1 begrenzt ist. Wie in Fig. 3 gezeigt, sind in den Außenumfang 13 des Prüfrings 116 kreisförmige Senkungen 24 eingelassen. In jede der Senkungen 24 ist, wie in Fig. 4 gezeigt, eine kreisförmige Platte 20 eingebracht, die mit in Fig. 4 nicht gezeigten Schrauben am Boden der Senkung 24 im Prüfring 1 festgeschraubt ist. Die Platte 20 verschließt die zum Außenumfang 13 des Prüfrings 1 hin orientierte Öffnung der Einführöffnung 5. Durch das durch die Radialsymmetrieachse der kreisförmigen Platte 20 gekennzeichnete Zentrum der Platte 20 ist eine Schraube 22 geschraubt. Mittels der Schraube 22 ist ein stabförmiges Testobjekt 2 an der Platte 20 befestigt. Das stabförmige Testobjekt 2 ist so dimensioniert, dass es durch die Einführöffnung 5 gesteckt werden kann und bei Befestigung an der am Prüfring 1 befestigten Platte 20 aus dem Innenumfang 7 des Prüfrings 1 herausragt.

In der Form des stabförmigen Testobjekts 2 kann das Verschleiß verhalten von Vollmaterialien charakterisiert werden. Es kann aber auch vorgesehen sein, dass die Beschichtung von Materialien in der Form der stabförmigen Testobjekte 2 getestet wird. Hierzu ist dann insbesondere auf den Teil des stabförmigen Testobjekts 2, der aus dem Innenumfang 7 des Prüfrings 1 herausragt, die zu testende Beschichtung aufgebracht. Die kreisförmige Senkung 24, die Platte 20, die Schrauben zur Befestigung der Platte 20 auf dem Boden der Senkung 24 und die Schraube 22 zur Verbindung des stabförmigen Testobjekts 2 mit der Platte 20 sind Teil der Haltevorrichtung 6. Mittels der Haltevorrichtung 6 kann das stabförmige Testobjekt 2 bei gleicher Form des stabförmigen Testobjekts 2 immer in gleicher Weise in den Materialstrom des Extruders 4 eingebracht werden.

Die Fig. 5 zeigt den Ausschnitt eines Schnitts durch den Prüfring 1 und durch ein in den Prüfring 1 mittels einer Haltevorrichtung 36 eingebrachtes scheibenförmiges Testobjekt 2, wobei der Bereich des Ausschnitts durch die in der Fig. 3 mit V gekennzeichnete Fläche und die Stirnflächen des Prüfrings 1 begrenzt ist. Wiederum zeigt der Schnitt eine weitere in den Außenumfang 13 des Prüfrings 1 eingelassene kreisförmige Senkung 24. In die Senkung 24 ist wiederum eine weitere kreisförmige Platte 20 eingebracht, die mit Schrauben 21 am Boden der Senkung 24 im Prüfring 1 festgeschraubt ist. Die Platte 20 verschließt die zum Außenumfang 13 des Prüfrings 1 hin orientierte Öffnung einer weiteren Einführöffnung 5. Durch das durch die Radialsymmetrieachse der kreisförmigen Platte 20 gekennzeichnete Zentrum der Platte 20 ist eine Schraube 22 geschraubt. Mittels der Schraube 22 ist ein Zwischenstück 25 an der Platte 20 befestigt. Das Zwischenstück 25 ist so dimensioniert, dass es durch die Einführöffnung 5 gesteckt werden kann und bei Befestigung an der Platte 20 nicht aus dem Innenumfang 7 des Prüfrings 1 herausragt. An dem dem Innenumfang 7 des Prüfrings 1 zugewandten Längsende des Zwischenstücks 25 ist mittels einer Schraube 23 ein scheibenförmiges Testobjekt 3 befestigt. Das scheibenförmige Testobjekt 3 kontaktiert das Zwischenstück 25 und ragt aus dem Innenumfang 7 des Prüfrings 1 heraus. In der Form des scheibenförmigen Testobjekts 3 kann das Verschleißverhalten von Flachmaterialien, wie beispielsweise XAR400 oder Verbundpanzerblech, charakterisiert werden. Die kreisförmige Senkung 24, die Platte 20, die Schrauben 21 zur Befestigung der Platte 20 auf dem Boden der Senkung 24, die Schraube 22 zur Verbindung des Zwischenstücks 25 mit der Platte 20 und die Schraube 23 zur Verbindung des scheibenförmigen Testobjekts 3 mit dem Zwischenstück 25 sind Teil der Haltevorrichtung 36. Mittels der Haltevorrichtung 36 kann das scheibenförmige Testobjekt 3 bei gleicher Form des scheibenförmigen Testobjekts 3 immer in gleicher Weise in den Materialstrom des Extruders 4 eingebracht werden.

Da der Durchmesser des Innenumfangs 7 des Prüfrings 1 mit den Innendurchmessern des Extruderzylinders 9 und des Presskopfs 8 an den Verbindungsstellen des Extruderzylinders 9 und des Presskopfs 8 mit dem Prüfring 1 übereinstimmt, ragen die in den Figuren 5 und 6 dargestellten Testobjekte 2, 3 bei Betrieb des Extruders 4 in den Materialstrom der Betriebsmasse des Extruders 4. So kann das Verschleißverhalten der Testobjekte 2, 3 charakterisiert werden. Da mehrere Testobjekte 2, 3 zugleich durch die 16 Einführöffnungen 5 des Prüfrings 1 in den Materialstrom eingebracht werden können, ist ein direkter und absoluter Vergleich des Verschleißverhaltens von unterschiedlichen Materialien der verschiedenen Testobjekte 2, 3 möglich. Eine Quantifizierung des Verschleißverhaltens der Testobjekte 2, 3 ist beispielsweise durch Wiegen oder Ausmessen der Testobjekte 2, 3 vor und nach einem Versuchsdurchlauf möglich.

Vorteilhaft werden die Form und Größe verschiedener miteinander zu vergleichender Testobjekte 2, 3 gleich gewählt. Auf diese Weise ist eine einfache quantitative Beurteilung des Verschleißverhaltens verschiedener Testobjekte 2, 3 beispielsweise durch Auswiegen oder Vermessen der Testobjekte 2, 3 vor und insbesondere auch lediglich nach einem Versuchsdurchlauf möglich.

Mittels der Haltevorrichtungen 6, 36 ist es möglich, die Platte 20 der Haltevorrichtung 30, 36 immer auf gleiche Weise in der Senkung 24 des Außenumfangs 13 des Prüfrings 1 zu befestigen, so dass die an der Haltevorrichtung 6, 36 befestigten Testobjekte 2, 3 immer identisch eingebaut sind. Auf diese Weise werden bei verschiedenen Versuchsdurchläufen vergleichbare Versuchsbedingungen hinsichtlich des Einbringens der Testobjekte 2, 3 in den Materialstrom geschaffen. Ein Austausch der Testobjekte 2, 3 ist schnell und auf einfache Weise möglich.

Im Ausführungsbeispiel nach der Fig. 2 ist der nicht dargestellte innere Hohlraum des Extruderzylinders 9, in dem die Extruderschnecke angeordnet ist, zumindest im Bereich des Übergangs zum Prüfring 1 zylinderförmig. Der Prüfring 1 aus dem Ausführungsbeispiel nach den Figuren 2 und 3 ist so am Extruderzylinder 9 angeordnet, dass die Orientierungen der Radialsymmetrieachse des flachzylinderförmigen Innenumfangs 7 des Prüfrings 1 und der Radialsymmetrieachse des zylinderförmigen Hohlraums des Extruderzylinders 9 übereinstimmen. So sind auch für Testobjekte 2, 3, die durch verschiedene Einführöffnungen 5 des Prüfrings in den Materialstrom des Extruders 4 eingebracht sind, weitgehend vergleichbare Versuchsbedingungen geschaffen.

Da im Ausführungsbeispiel nach den Figuren 2 bis 5 die Einführöffnungen 5 durch Bohrungen realisiert sind, die radial zum kreisförmigen Durchlassquerschnitt des Prüfrings angeordnet sind, sind für gleich dimensionierte Testobjekte 2, 3, die durch an verschiedenen Stellen angeordnete Einführöffnungen 5 in den Materialstrom des Extruders eingebracht werden, sehr vergleichbare Versuchsbedingungen geschaffen.

Im Rahmen der Erfindung sind aber auch Abweichungen von der hier gezeigten Kreisform des Querschnittes möglich. Denkbar ist zum Beispiel die Positionierung und Befestigung des Prüfrings 1 an der Ausgangsseite des Presskopfes 8, wobei dann der Durchlassquerschnitt des Prüfrings 1 in Form und Größe an die ausgangsseitige Öffnung 10 des Presskopfes 8 angepasst ist. In diesem Zusammenhang ist auch zu erwähnen, dass die Bedeutung des hier insgesamt benutzten Begriffs "radial" weit auszulegen ist. Es ist nicht zwangsläufig notwendig, dass eine exakt radiale Ausrichtung auf den Mittelpunkt eines kreisförmigen Querschnitts erfolgt. Vielmehr kann eine radiale Richtungskomponente bezüglich der Querschnittsmittelachse ausreichen.

Ein Vergleich verschiedener Versuchsdurchläufe ist durch ein Referenztestobjekt möglich. Die verschiedenen Referenztestobjekte sind jeweils in Form und Material gleich beschaffen. Für jeden neuen Versuchsdurchlauf wird ein neues Referenztestobjekt, möglichst durch dieselbe Einführöffnung 5 wie zuvor eingebracht. Die Form eines Referenztestobjekts kann der beschriebenen Form der Testobjekte 2, 3 entsprechen. Als Material für ein solches Referenztestobjekt kann beispielsweise der Stahl S 355 JR vorgesehen sein. Aus der quantitativen Charakterisierung des Verschleißverhaltens dieser Referenztestobjekte kann ermittelt werden, ob die Versuchsbedingungen der verschiedenen Versuchsdurchläufe vergleichbar sind. Eine absolute Vergleichbarkeit der verschiedenen Versuchsdurchläufe ist nur gegeben, wenn das ermittelte Verschleißverhalten der Referenztestobjekte in allen miteinander zu vergleichenden Versuchsdurchläufen gleich ist. Sollte das nicht der Fall sein, können aus der Stärke von Abweichungen des Verschleißverhaltens der Referenztestobjekte in den verschiedenen Versuchsdurchläufen Rückschlüsse darauf gezogen werden, wie das Verschleißverhalten der anderen Testobjekte gewesen wäre, wenn die Versuchsbedingungen in allen Versuchsdurchläufen tatsächlich gleich gewesen wären.

## Patentansprüche

1. Vorrichtung zur Verschleißcharakterisierung der in einem Extruder (4) eingesetzten Materialien,
**dadurch gekennzeichnet, dass** die Vorrichtung als Prüfring (1) zum Einbringen von Testobjekten (2, 3) in den Materialstrom des Extruders (4) ausgebildet ist.

2. Vorrichtung nach Anspruch 1,
**dadurch gekennzeichnet, dass** der Prüfring (1) zur Befestigung am Extruder (4) ausgelegt ist, wobei der Prüfring (1) bezogen auf seine radiale Richtung eine Außenseite und eine Innenseite aufweist, und wobei der Prüfring (1) mindestens eine von der Außenseite zur Innenseite führende Einführöffnung (5) aufweist, durch die ein Testobjekt (2, 3) von der Außenseite des Prüfrings (1) in den Materialstrom des Extruders (4) einführbar ist.

3. Vorrichtung nach Anspruch 1 oder 2,
**dadurch gekennzeichnet, dass** der Prüfring (1) mehrere über seinen Umfang verteilte Einführöffnungen (5) aufweist.

4. Vorrichtung nach Anspruch 2 oder 3,
**dadurch gekennzeichnet, dass** der Prüfring (1) eine Haltevorrichtung (6, 36) für das Testobjekt (2 ,3) umfasst, wobei die Haltevorrichtung (6, 36) radial von außen in die Einführöffnung (5) eingeführt und dort befestigt ist.

5. Vorrichtung nach einem der Ansprüche 1 bis 4,
**dadurch gekennzeichnet, dass** der Prüfring (1) einen im Wesentlichen kreisförmigen Durchlassquerschnitt aufweist.

6. Extruderanordnung, umfassend einen Extruder und einen daran angebrachten Prüfring (1) nach einem der Ansprüche 1 bis 5.

7. Extruderanordnung nach Anspruch 6,
**dadurch gekennzeichnet, dass** der Extruder einen Presskopf (8) und einen Extruderzylinder (9) umfasst, und dass der Prüfring (1) zwischen dem Presskopf (8) und dem Extruderzylinder (9) angeordnet ist.

8. Extruderanordnung nach Anspruch 6 oder 7,
**dadurch gekennzeichnet, dass** die Durchlassquerschnitte des Presskopfs (8), des Prüfrings (1) und des Extruderzylinders (9) an ihren Verbindungsstellen gleich geformt sind.
